# EUROPÄISCHE PATENTANMELDUNG

(11) **EP 1 467 113 A1**
(43) Veröffentlichungstag der Anmeldung: **13.10.2004**
(21) Anmeldenummer: 03008335.6
(22) Anmeldetag: 09.04.2003
(51) Int. Cl.: F16D 65/12, F16D 13/64

(54) **Reibbelagsegment und Verfahren zur Herstellung von Reibbelagsegmenten**

(71) Anmelder: BorgWarner, Inc., Auburn Hills, MI 48326-1782 (US)
(72) Erfinder: Merkel, Harald, 74889 Sinsheim (DE); Otremba, Markus, 68723 Schwetzingen (DE); Wagner, Michael, 68782 Brühl (DE)
(74) Vertreter: Neunert, Peter Andreas

(57) **Zusammenfassung**

Die Erfindung betrifft ein Reibbelagsegment (2) für einen segmentierten Reibbelag einer Reibscheibe (9) wobei das Reibbelagsegment (2) ringsegmentförmig ausgebildet ist, mit einem durch einen Außenradius beschriebenen äußeren Berandungsabschnitt (3) und einem durch einen Innenradius beschriebenen inneren Berandungsabschnitt (6), und wobei der Außenradius und der Innenradius gleich sind.

## Beschreibung

Die Erfindung betrifft ein Reibbelagsegment gemäß dem Oberbegriff des Patentanspruchs 1, einen Reibbelag gemäß dem Oberbegriff des Patentanspruchs 9 sowie ein Verfahren zur Herstellung von Reibbelagsegmenten gemäß dem Oberbegriff des Patentanspruchs 15.

Brems- oder Kupplungseinrichtungen weisen eine oder mehrere Reibscheiben mit vorzugsweise im wesentlichen ringförmiger Gestalt auf. Mehrscheiben-Lamellen-Kupplungen basieren auf zwei oder mehr im allgemeinen als Lamellen bezeichneten Reibscheiben. Eine erste Gruppe dieser Lamellen, die sog. Außenlamellen, sind auf einem mit einer ersten Welle, beispielsweise einer Antriebswelle, gekoppelten Außenlamellenträger und eine zweite Gruppe dieser Lamellen, die sog. Innenlamellen sind auf einem mit einer zweiten Welle, beispielsweise mit einer Abtriebswelle, gekoppelten Innenlamellenträger angeordnet. Die Lamellen der beiden Gruppen greifen verzahnungsartig, ein Lamellenpaket bildend, ineinander. Hierbei sind Außenlamellen und Innenlamellen in axialer Richtung zueinander begrenzt verschiebbar und dabei paarweise mit deren aneinander grenzenden Stirnflächen in Reibeingriff.

Reibscheiben oder Lamellen weisen vorzugsweise einen metallischen, ringförmig ausgebildeten Träger auf, welcher auf einer oder auf beiden Stirnflächen einen aus bspw. einem Faserstoff gefertigten Reibbelag trägt.

Reibbeläge der vorgenannten Art wurden anfangs einstückig ausgeführt. Da das Fasermaterial in Form quaderförmiger Platten vorlag, aus dem die Reibbeläge ausgestanzt werden, ergab sich ein großer nicht zu verwendender Verschnitt.

Darüber hinaus ist aus dem Stand der Technik bekannt, einen langen Strang aus Reibmaterial mit einem relativ kleinen Querschnitt zu extrudieren. Der Strang wird dann anschließend in mehrere kleine Segmente zerschnitten, die auf den Träger der Lamelle aufgebracht werden können.

Um Reibmaterial einzusparen, ist am weitesten verbreitet, ringsegmentförmige Reibbelagsegmente aus einem flachen Materialabschnitt auszuschneiden oder auszustanzen. Hierbei weisen die Reibbelagsegmente einen durch einen Außenradius beschriebenen äußeren Berandungsabschnitt und einen durch einen Innenradius beschriebenen inneren Berandungsabschnitt auf. Sind die Reibbelagsegmente als Reibfläche auf dem Träger der Lamelle zusammengesetzt, bilden die äußeren Berandungsabschnitte einen Kreis, welcher konzentrisch zu dem durch die inneren Berandungsabschnitte gebildeten Kreis verläuft.

Dem zufolge unterscheiden sich bei den aus dem Stand der Technik bekannten Reibbelagsegmenten der Außen- und der Innenradius voneinander. Nachteilig an diesem Herstellverfahren ist, dass beim Ausschneiden bzw. Ausstanzen der Segmente ein Faserstoffstreifen zwischen den einzelnen Segmenten verbleibt, welcher nicht genutzt werden kann. Ebenso muss bei diesem Verfahren jeder Berandungsabschnitt eines Reibbelagsegments für sich ausgestanzt bzw. ausgeschnitten werden, was sich auf Grund des Bedürfnisses, Fertigungsschritte und Prozesse einfach und kostengünstig zu gestalten, als nachteilig erweist.

Der Erfindung liegt somit die Aufgabe zugrunde ein einfach aufgebautes und kostensparend herstellbares Reibbelagsegment, bzw. einen aus solchen Reibbelagsegmenten aufgebauten Reibbelag vorzuschlagen. Eine weitere Aufgabe der vorliegenden Erfindung besteht darin, ein Verfahren vorzustellen, mit dem sich derartige Reibbelagsegmente herstellen lassen.

Die Aufgabe wird erfindungsgemäß durch ein Reibbelagsegment mit den Merkmalen des Patentanspruchs 1 bzw. durch einen Reibbelag mit den Merkmalen des Patentanspruchs 9, sowie durch ein Verfahren mit den Merkmalen des Patentanspruchs 15 gelöst.

Bevorzugte Ausführungsformen und vorteilhafte Weiterbildungen sind in den Unteransprüchen aufgeführt.

Das Reibbelagsegment für einen segmentierten Reibbelag einer Reibscheibe gemäß der Gattung ist ringsegmentförmig ausgebildet. Das Ringsegment wird im wesentlichen durch einen äußeren Berandungsabschnitt und einen inneren Berandungsabschnitt gebildet. Beim erfindungsgemäßen Reibbelagsegment sind darüber hinaus der äußere Berandungsabschnitt und der innere Berandungsabschnitt formkomplementär ausgebildet, d.h. sie haben gleiche geometrische Gestalt. Die Erfindung basiert folglich auf der Idee, dass bei der Segmentierung der Reibbelagsegmente aus einem flachen Materialabschnitt, auf Grund der gleichen äußeren und inneren Berandungsabschnitte, keine unverwertbaren Streifen zwischen den einzelnen Reibbelagsegmenten gebildet werden. Hierdurch wird die Nutzung des Reibbelagmaterials deutlich erhöht, da kein Verschnitt entsteht.

Auf Grund des Konstruktionsprinzips der gleichen äußeren und inneren Berandungsabschnitte ist es möglich, die Reibbelagsegmente beim Segmentieren auf dem flachen Materialabschnitt dergestalt anzuordnen, dass der innere Berandungsabschnitt eines ersten Reibbelagsegments gleichzeitig den äußeren Berandungsabschnitt eines zweiten Reibbelagsegments bildet. Demzufolge bildet der innere Berandungsabschnitt des zweiten Reibbelagsegments gleichzeitig den äußeren Berandungsabschnitt eines dritten Reibbelagsegments. Dieses Prinzip ist für alle nachfolgenden Reibbelagsegmente fortsetzbar.

Für das Prinzip der Erfindung ist es ohne Belang, welche konkrete Gestalt die Berandungsabschnitte aufweisen, solange diese gleich sind. Eine bevorzugte Ausführungsform sieht vor, dass der äußere Berandungsabschnitt durch einen Außenradius mit einem Mittelpunkt und der innere Berandungsabschnitt durch einen Innenradius mit einem Mittelpunkt beschrieben wird, wobei der Außenradius gleich dem Innenradius ist. Hierbei ist es unerheblich, ob die Radien konstant oder variabel sind, solange diese gleich sind. Durch konstante Radien werden Kreisbogenabschnitte beschrieben und durch variable Radien werden beispielsweise parabelförmige Berandungsabschnitte beschrieben.

Da Reibscheiben in der Regel kreisringförmig ausgebildet sind, sieht eine bevorzugte Ausführungsform vor, dass der äußere und der innere Berandungsabschnitt durch einen Kreisbogenabschnitt gebildet werden.

Die explizite Form der Reibbelagsegmente ist für das Prinzip der Erfindung ohne Belang, solange gewährleistet ist, dass der äußere und der innere Berandungsabschnitt gleich sind. So ist es beispielsweise denkbar, dass das ringsegmentförmig ausgebildete Reibbelagsegment an einem ersten längsseitigen Ende in Radiusrichtung breiter ausgeführt ist als am gegenüberliegenden zweiten längsseitigen Ende. Eine bevorzugte Ausführungsform sieht vor, dass das Reibbelagsegment durch zwei zueinander spiegelsymmetrische Abschnitte gebildet wird. Bei diesem Ausführungsbeispiel weist das erste längsseitige Ende des Reibbelagsegments in Radiusrichtung betrachtet die gleiche Breite auf, wie das gegenüberliegende zweite längsseitige Ende. Die maximale Breite des Reibbelagsegments ist bei dieser Ausführungsform im Übergangsbereich zwischen den zwei zueinander spiegelsymmetrischen Abschnitten.

Eine an die obige Ausführungsform anknüpfende Ausführungsform sieht vor, dass alle Mittelpunkte der Berandungsabschnitte auf einer Mittelpunktsgerade angeordnet sind, und die Reibbelagsegmente durch die Mittelpunktsgerade jeweils in die zueinander spiegelsymmetrischen Abschnitte unterteilt werden.

Für das Prinzip der Erfindung ist es ohne Belang, welchen Bogenwinkel das Reibbelagsegment überspannt. Da beim Konstruktionsprinzip der gleichen Außen- und Innenradien die Breitenvariation, d.h. die Differenz zwischen minimaler und maximaler Breite in Radiusrichtung des Reibbelagsegments, mit steigendem Bogenwinkel, den das Reibbelagsegment überspannt, wächst, ist es sinnvoll, wenn das Reibbelagsegment einen Bogenwinkel zwischen 45° und 90°, insbesondere zwischen 70° und 80° überspannt. Durch diese Maßnahme wird die Breitenvariation in einem vertretbaren Rahmen gehalten.

Des weiteren kann die Breitenvariation des Reibbelagsegments dadurch minimiert werden, dass der Außen- bzw. der Innenradius zum Versatz der beiden Mittelpunkte auf der Mittelpunktsgerade ein Verhältnis zwischen 6 und 10, insbesondere zwischen 8 und 9, aufweist.

Um die auf den Träger der Reibscheibe zu montierenden Reibbelagsegmente an ihren jeweils aneinander grenzenden längsseitigen Enden miteinander zu verbinden, ist es sinnvoll, wenn das Reibbelagsegment an seinem ersten längsseitigen Ende ein Schlosselement und an seinem zweiten längsseitigen Ende ein zum Schlosselement form- und funktionskomplementäres Schlossgegenelement aufweist.

Selbstverständlich weist ein Reibbelag, welcher aus wenigstens zwei ringsegmentförmig ausgebildete Reibbelagsegmenten nach einer der vorausgegangenen Ausführungsformen aufgebaut ist, die bereits beschriebenen Vorzüge auf.

Welchen Bogenwinkel die auf dem Träger der Reibscheibe angeordneten und den Reibbelag bildenden wenigstens zwei Reibbelagsegmente überspannen, ist für das Prinzip der Erfindung unwesentlich. So ist es denkbar, dass die Reibbelagsegmente aus Gründen der Minimierung des Verschnitts bei der Segmentierung jeweils unterschiedliche Bogenwinkel überspannen, oder dass zumindest ein Reibbelagsegment einen anderen Bogenwinkel überspannt als die anderen Reibbelagsegmente. Eine bevorzugte Ausführungsform sieht, nicht zuletzt aus Gründen der Standardisierung und Vereinheitlichung, vor, dass alle Reibbelagsegmente den gleichen Bogenwinkel überspannen oder, dass sogar alle Reibbelagsegmente gleich ausgebildet sind.

Gemäß dem Verfahren zur Herstellung von ringsegmentförmig ausgebildeten Reibbelagsegmenten eines segmentieren Reibbelages, wobei die Reibbelagsegmente einen äußeren Berandungsabschnitt und einen inneren Berandungsabschnitt aufweisen, ist vorgesehen, dass zumindest zwei Reibbelagsegmente mit den folgenden Verfahrensschritten aus einem flachen Material herstellbar sind.
- Ausschneiden oder Ausstanzen eines äußeren Berandungsabschnittes eines ersten Reibbelagsegments,
- Ausschneiden oder Ausstanzen eines inneren Berandungsabschnitts des ersten Reibbelagsegments der zum äußeren Berandungsabschnitt gleich ausgebildet ist, wobei der innere Berandungsabschnitt versetzt zum äußeren Berandungsabschnitt verläuft.
- Verwenden des inneren Berandungsabschnitts des ersten Reibelements als äußeren Berandungsabschnitt eines zweiten Reibelements.
- Ausschneiden oder Ausstanzen eines inneren Berandungsabschnitt des zweiten Reibbelagselements der zu den vorangegangenen Berandungsabschnitten gleich ausgebildet ist, wobei der innere Berandungsabschnitt zu den vorangegangene Berandungsabschnitten versetzt verläuft.

Das obige Verfahren ist selbstverständlich auch zur Herstellung von Reibbelagsegmenten geeignet, bei denen der äußere Berandungsabschnitt durch einen Außenradius und einen Mittelpunkt und der innere Berandungsabschnitt durch einen Innenradius und einen Mittelpunkt beschrieben wird. Bei diesem Ausführungsbeispiel sind alle Außen- und Innenradien gleich und die verschiedenen Mittelpunkte zueinander versetzt.

Wie der Versatz der Mittelpunkte im Detail erfolgt, ist für das Prinzip der Erfindung nicht ausschlaggebend. So ist eine vielfältige Möglichkeit des Versatzes der Mittelpunkte denkbar, um verschiedene Formen und Gestalten von Reibbelagsegmenten mit gleichem Innen- und Außenradius zu erhalten.

Eine besonders bevorzugte Ausführungsform des erfindungsgemäßen Herstellungsverfahrens sieht vor, dass jeder äußere bzw. innere Berandungsabschnitt der Reibbelagsegmente in sich spiegelsymmetrisch zu einer, die Mittelpunkte verbindenden Mittelpunktsgerade, ausgeschnitten oder ausgestanzt wird.

Bei der Herstellung von spiegelsymmetrischen und zueinander gleich ausgebildeten Reibbelagsegmenten ist vorgesehen, dass alle Mittelpunkte auf der Mittelpunktsgeraden jeweils gleich zueinander beabstandet sind, und dass die Berandungsabschnitte zu beiden Seiten der Mittelpunktsgerade den gleichen Bogenwinkel überspannen. Das Herstellungsverfahren von spiegelsymmetrisch aufgebauten ringsegmentförmigen Reibbelagsegmenten kann wie folgt beschrieben werden:
- Spiegelsymmetrisches Ausschneiden oder Ausstanzen eines ersten Berandungsabschnittes bezüglich einer Mittelpunktsgerade.
- Spiegelsymmetrisches Ausschneiden oder Ausstanzen eines zweiten Berandungsabschnitts, wobei dessen Mittelpunkt um einen Wert Δ zum ersten Mittelpunkt des ersten Berandungsabschnitts auf der Mittelpunktsgerade versetzt ist, und wobei der zweite Berandungsabschnitt den gleichen Bogenwinkel wie der vorangegangene erste Berandungsabschnitt überspannt.
- Spiegelsymmetrisches Ausschneiden oder Ausstanzen eines dritten Berandungsabschnitts bezüglich der Mittelpunktsgerade, wobei der dritte Mittelpunkt des dritten Berandungsabschnitts auf der Mittelpunktsgerade ebenfalls um den Wert Δ zum zweiten Mittelpunkt des zweiten Berandungsabschnitts versetzt ist, und wobei der dritte Berandungsabschnitt den gleichen Bogenwinkel wie die vorangegangenen Berandungsabschnitte überspannt.

Dieses Verfahren kann beliebig oft fortgeführt werden. An dieser Stelle soll nicht unbemerkt bleiben, dass alle oben skizzierten Verfahrensschritte nicht notwendigerweise zeitlich nacheinander folgend ausgeführt werden müssen. So ist es ebenfalls denkbar, dass alle oben skizzierten Verfahrensschritte gleichzeitig, beispielsweise durch ein einzigen Stanzschritt, bewirkt werden. Des weiteren soll nicht unerwähnt bleiben, dass das Ausschneiden oder Ausstanzen der längsseitigen Enden der Reibbelagsegmente ebenfalls zeitgleich oder den vorangegangenen Verfahrensschritten nachfolgend durchgeführt werden kann.

Nachfolgend wird die Erfindung anhand von schematischen, nicht maßstabsgerechten Zeichnungen auf der Grundlage eines bevorzugten Ausführungsbeispiels weiter veranschaulicht. Es zeigen:
- Figur 1: Segmentierung eines flachen Materialabschnitts aus Fasermaterial beim erfindungsgemäßen Verfahren zur Herstellung von Reibbelagsegmenten in Draufsicht.
- Figur 2: Ein aus erfindungsgemäßen Reibbelagsegmenten zusammengesetzter Reibbelag in Draufsicht.

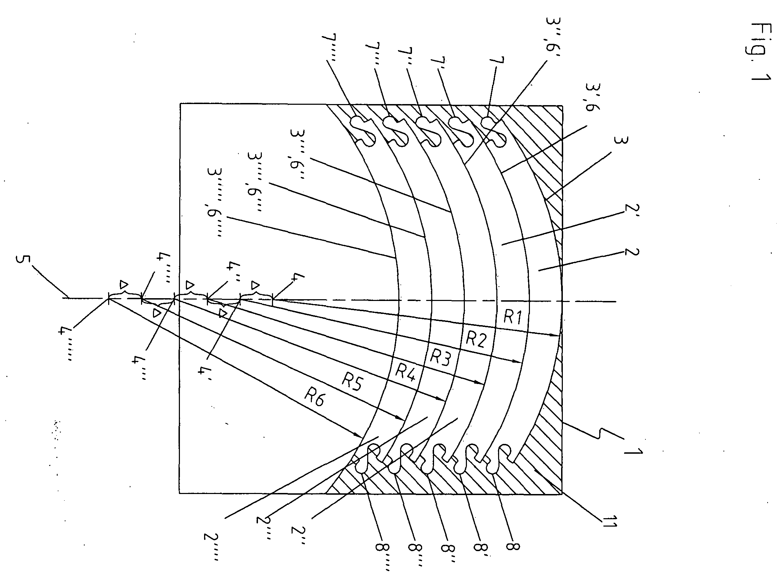

Figur 1 zeigt eine einen flachen Materialabschnitt bildende Platte 1 aus Faserstoff, aus der mehrere Reibbelagsegmente 2, 2', 2" ausgeschnitten / ausgestanzt werden sollen.

Ein erstes Reibbelagsegment 2 wird durch einen äußeren Berandungsabschnitt 3 mit einem Außenradius R1 und Mittelpunkt 4 sowie durch einen inneren Berandungsabschnitt 6 mit Radius R2 und Mittelpunkt 4' beschrieben.

An das erste Reibbelagsegment 2 grenzt direkt ein zweites Reibbelagsegment 2' mit einem äußeren Berandungsabschnitt 3' und einem inneren Berandungsabschnitt 6' an. Aufgrund des Konstruktionsprinzips der gleichen äußeren und inneren Berandungsabschnitte sind der innere Berandungsabschnitt 6 des ersten Reibbelagsegments 2 und der äußere Berandungsabschnitt 3' des zweiten Reibbelagsegments identisch ausgebildet. Der innere Berandungsabschnitt 3' des zweiten Reibbelagsegments 2' weist ferner einen Radius R3 mit Mittelpunkt 4" auf. Hierbei sind alle Radien R1, R2 und R3 gleich. Im vorliegenden Ausführungsbeispiel sind die Radien R1, R2 und R3 darüber hinaus konstant, d.h. unabhängig vom Bogenwinkel. Daraus folgt, dass die Berandungsabschnitte 3 und 3',6 und 6' sowie alle weiteren (hier nicht explizit beschriebenen) Berandungsabschnitte Kreis bogenabschnitte bilden. Das für die Reibbelagsegmente 2, 2' beschriebene Prinzip lässt sich für alle weiteren Reibbelagsegmente 2" usw. fortsetzen, d.h. jeweils die inneren Berandungsabschnitte der in der Figur oberen Reibbelagsegmente sind bei der Segmentierung identisch den äußeren Berandungsabschnitten der unter den oberen Reibbelagsegmenten angeordneten unteren Reibbelagsegmente.

Des weiteren sind die Mittelpunkte 4, 4' und 4" der Berandungsabschnitte 3 und 3',6 und 6' auf einer die Mittelpunkte verbindenden Mittelpunktsgerade 5 jeweils um den Betrag Δ zueinander versetzt angeordnet. Dieses Prinzip gilt ebenfalls für alle weiteren Mittelpunkte 4"' usw der anderen Berandungsabschnitte.

Wie aus der Figur 1 zu erkennen ist, sind die Reibbelagsegmente 2, 2', 2" usw. aus zwei zueinander spiegelsymmetrischen Abschnitten bezüglich der Mittelpunktgerade 5 aufgebaut. Des weiteren erkennt man, dass an den jeweils ersten längsseitigen Enden der Reibelemente 2,2',2" usw. jeweils ein Schlosselement 7,7'7" usw. sowie an deren zweiten längsseitigen Enden jeweils ein zum Schlosselement 7,7'7''' usw. form- und funktionskomplementäres Schlossgegenelement 8,8'8" usw. vorgesehen ist.

Erfindungsgemäß wird durch die Konstruktion der gleichen äußeren und inneren Berandungsabschnitte bei der Segmentierung erreicht, da der Grenzbereich zwischen jeweils aneinandergrenzende Reibbelagsegmente 2,2'2" durch die gleichen inneren und äußeren Berandungsabschnitte 3' und 6, 3" und 6', 3" und 6" gebildet wird, dass zwischen zwei aneinandergrenzenden Reibbelagsegmenten 2, 2', 2" usw. kein Zwischenraum auf der Platte 1 entsteht, der als Materialverschnitt 11 bei der Herstellung der Reibbelagsegmente 2,2'2" usw. anfällt.

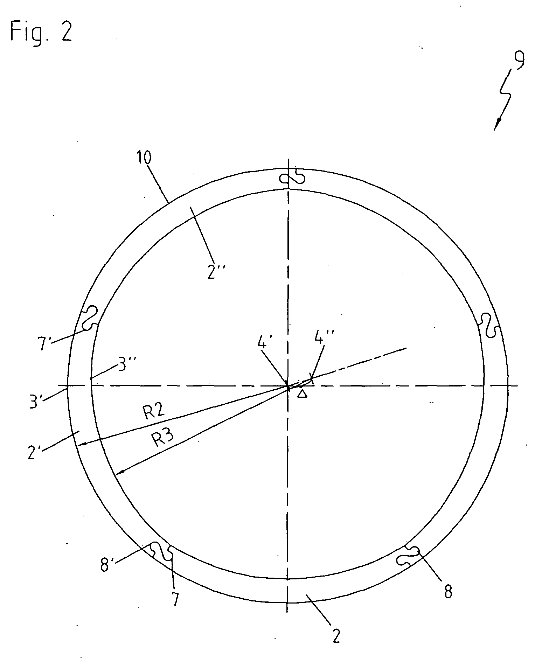

Die Figur 2 zeigt eine Reibscheibe 9, mit auf einem Träger 10 angeordneten Reibbelagsegmenten 2, 2', 2" usw., die gemäß der Figur 1 ausgeführt sind. Im vorliegenden Ausführungsbeispiel sind auf dem Träger 10 Reibbelagsegmente 2,2'2" usw. angeordnet, die jeweils mit ihren längsseitigen Enden aneinander grenzen. Alle Reibbelagsegmente 2, 2', 2" usw. sind gleich ausgebildet und überspannen jeweils einen Bogenwinkel von 72°. Die aneinander grenzenden längsseitigen Enden zweier Reibbelagsegmente, beispielsweise 2 und 2', sind durch ein Schlosselement 7 und ein dazu form- und funktionskomplementäres Schlosselement 8' miteinander verbunden.

Des weiteren weisen die Innenradien bzw. Außenradien Ri zum Versatz Δ der Mittelpunkte ein Verhältnis von 8,7 auf. Dieser Sachverhalt ist exemplarisch am Reibbelagsegment 2' dargestellt.

### Bezugszeichenliste

- 1: Platte
- 2: Reibbelagsegment
- 3: äußerer Berandungsabschnit
- 4: Mittelpunkt (Bogenabschnit)
- 5: Mittelpunktsgerade
- 6: innerer Berandungsabschnitt
- 7: Schloßelement
- 8: Schloßgegenelement
- 9: Reibscheibe
- 10: Träger
- 11: Materialverschnitt

## Patentansprüche

1. Reibbelagsegment (2) für einen segmentierten Reibbelag einer Reibscheibe (9), wobei das Reibbelagsegment ringsegmentförmig ausgebildet ist, mit einem äußeren Berandungsabschnitt (3) und einem inneren Berandungsabschnitt (6),
**dadurch gekennzeichnet,**
**dass** der äußere Berandungsabschnitt (3) und der innere Berandungsabschnitt (6) formkomplementär ausgeführt sind.

2. Reibbelagsegement nach Anspruch 1,
**dadurch gekennzeichnet,**
**dass** der äußere Berandungsabschnitt (3) durch einen Außenradius mit einem Mittelpunkt und der innere Berandungsabschnitt (6) durch einen Innenradius mit einem Mittelpunkt beschrieben werden, und dass der Außenradius gleich dem Innenradius ist.

3. Reibbelagsegment nach Anspruch 1 oder 2,
**dadurch gekennzeichnet,**
**dass** der äußere Berandungsabschnitt(3) und der innere Berandungsabschnitt (6) durch einen Kreisbogenabschnitt gebildet werden.

4. Reibbelagsegment nach Anspruch 1 bis 3,
**dadurch gekennzeichnet,**
**dass** das Reibbelagsegment (2), durch zwei zueinander spiegelsymmetrische Abschnitte gebildet wird.

5. Reibbelagsegment nach einem der Ansprüche 1 bis 4,
**dadurch gekennzeichnet,**
**dass** eine Mittelpunktgerade (5), welche sich durch die Mittelpunkte (4) der Berandungsabschnitte (3, 6) erstreckt, das Reibbelagsegment (2) in die zueinander symmetrischen Abschnitte teilt.

6. Reibbelagsegment nach einem der Ansprüche 1 bis 5,
**dadurch gekennzeichnet,**
**dass** das Reibbelagsegment (2) einen Bogenwinkel zwischen 45° und 90°, insbesondere zwischen 70° und 80° überspannt.

7. Reibbelagsegment nach einem der Ansprüche 1 bis 6,
**dadurch gekennzeichnet,**
**dass** der Außen- bzw. Innenradius zum Versatz (Δ) der beiden Mittelpunkte (4) auf der Mittelpunktsgerade (5) ein Verhältnis zwischen 6 und 10, insbesondere zwischen 8 und 9, aufweist.

8. Reibbelagsegment nach einem der Ansprüche 1 bis 7
**dadurch gekennzeichnet,**
**dass** das Reibbelagsegment (2) an seinem ersten längsseitigen Ende ein Schlosselement (7) und an seinem zweiten längsseitigen Ende ein zum Schlosselement (7) form - und funktionskomplementäres Schlossgegenelement (8) aufweist.

9. Reibbelag für eine Reibscheibe (9) mit wenigstens zwei ringsegmentförmig ausgebildeten Reibbelagsegmenten (2) nach einem der Ansprüche 1 bis 8.

10. Reibbelag nach Anspruch 9,
**dadurch gekennzeichnet,**
**dass** wenigstens zwei Reibbelagsegmente (2) jeweils mit zumindest einem ihrer längsseitigen Enden aneinander grenzen.

11. Reibbelag nach Anspruch 9 oder 10,
**dadurch gekennzeichnet,**
**dass** die aneinander grenzenden Reibbelagsegmente (2) jeweils mittels Schloss (7) des ersten Reibbelagsegments (2) und Gegenschloss (8) des zweiten Reibbelagsegments (2) miteinander verbunden sind.

12. Reibbelag nach Anspruch einem der Ansprüche 9 bis 11,
**dadurch gekennzeichnet,**
**dass** alle der wenigsten zwei Reibbelagsegmente (2) den gleichen Bogenwinkel überspannen.

13. Reibbelag nach Anspruch 12,
**dadurch gekennzeichnet,**
**dass** alle Reibbelagsegmente (2) gleich ausgebildet sind.

14. Reibbelag nach Anspruch einem der Ansprüche 7 bis 11,
**dadurch gekennzeichnet,**
**dass** die zumindest zwei Reibbelagsegmente (2) zusammen einen Bogenwinkel von im Wesentlichen 360° überspannen.

15. Verfahren zur Herstellung von Reibbelagsegmenten (2) eines segmentierten Reibbelags, wobei die Reibbelagsegmente (2) ringsegmentförmig ausgebildet sind, mit einem äußeren (3) bzw. inneren Berandungsabschnitt (6),
**dadurch gekennzeichnet,**
**dass** zumindest zwei Reibbelagsegmente (2) mit den folgenden Verfahrensschritten aus einem flachen Materialabschnitt herstellbar sind:
- Ausschneiden oder Ausstanzen eines äußeren Berandungsabschnitts (3) eines ersten Reibbelagsegments (2),
- Ausschneiden oder Ausstanzen eines inneren Berandungsabschnitts (6) des ersten Reibbelagssegments (2) der gleich zum äußeren Berandungsabschnitt (3) ist, wobei der innere Berandungsabschnitt (6) versetzt zum äußeren Berandungsabschnitt (3) verläuft,
- Verwenden des inneren Berandungsabschnitts (6) des ersten Reibelements (2) als äußeren Berandungsabschnitt (3') eines zweiten Reibbelagsegments (2'),
- Ausschneiden oder Ausstanzen eines inneren Berandungsabschnitts (3") des zweiten Reibbelagssegments (2') der gleich wie die vorangegangenen Berandungsabschnitte ist, wobei der innere Berandungsabschnitt (3") zu den vorangegangenen Berandungsabschnitten versetzt verläuft.

16. Verfahren zur Herstellung von Reibbelagsegmenten nach Anspruch 15,
**dadurch gekennzeichnet,**
**dass** die Berandungsabschnitte (2,3,2',3',2",3") jeweils gleich zueinander versetzt sind.

17. Verfahren zur Herstellung von Reibbelagsegementen nach Anspruch 15 oder 16,
**dadurch gekennzeichnet,**
**dass** der äußere Berandungsabschnitt (3', 3,', 3") und der innere Berandungsabschnitt (6, 6') der zumindest zwei Reibbelagsemente (2, 2') durch einen Außenradius (R₁, R₂, R₃)mit Mittelpunkt (4, 4', 4'') bzw. durch einen Innenradius (R₂, R₃,) mit Mittelpunkt (4', 4") beschrieben werden, wobei alle Radien (R₁, R₂, R₃) gleich und die Mittelpunkte (4, 4', 4") zueinander versetzt sind.

18. Verfahren zur Herstellung von Reibbelagsegmenten nach Anspruch 17,
**dadurch gekennzeichnet,**
**dass** jeder äußere (3,3', 3") bzw. innere Berandungsabschnitt (6, 6') der zumindest zwei Reibbelagsegmente in sich spiegelsymmetrisch zu einer die zumindest drei Mittelpunkte (4, 4' 4")verbindenden Mittelpunktsgerade (5) ausgeschnitten oder ausgestanzt wird.

19. Verfahren zur Herstellung von Reibbelagsegmenten nach einem der Ansprüche 17 bis 18,
**dadurch gekennzeichnet,**
**dass** die jeweils nebeneinander angeordneten Mittelpunkte (4, 4', 4") auf der Mittelpunktsgerade (5) gleich zueinander beabstandet sind.

20. Reibscheibe (9) mit einem Träger (10) und mit wenigstens einem auf wenigstens einer Stirnseite des Trägers (10) angeordnetem Reibbelag gemäß einem der Ansprüche 9 bis 14.

21. Reibscheibe nach Anspruch 20,
**dadurch gekennzeichnet,**
**dass** die Reibscheibe (9) in einer Schaltkupplung, Anfahrkupplung, Wandlerüberbrückungskupplung oder Bremse Verwendung findet.
